# EUROPEAN PATENT APPLICATION

(11) **EP 1 602 433 A1**
(43) Date of publication of application: **07.12.2005**
(21) Application number: 05009964.7
(22) Date of filing: 06.05.2005
(51) Int. Cl.: B23H 7/10

(54) **V-shaped guide serving to route the spent wire in a wire electrical discharge machine**

(30) Priority: 04.06.2004 CH 9452004
(71) Applicant: CHARMILLES TECHNOLOGIES S.A., 1217 Meyrin 1 (CH)
(72) Inventor: Batelaan, Dirk Cornelis, 1212 Grand Lancy (CH); Navarrete, Miguel, 1204 Genève (CH); Terekhov, Konstantin, 1214 Vernier (CH); Grandjean, Michel Marcel Robert, 1242 Satigny (CH)
(74) Representative: Weiss, Wolfgang

(57) **Abstract**

The present invention relates to a guide piece serving to route the spent wire (20), installed upstream of and between the wire drive rollers (39, 40) in order to introduce therein the spent wire in electrical discharge machines that employ a device for recovering and cutting the spent wire (30) which chops it into small segments after it has passed through the machining zone, intended to replace a piece (510) performing the same function, comprising a protrusion (515) which disrupts the flow of a liquid at the entrance to a curved wire guiding slideway (511), an outlet nose (512) the end of which is close to the generatrix of contact between the said rollers (39, 40), characterized in that it comprises means making it possible to enhance the said flow of liquid in the direction of rotation of the rollers (39, 40).

## Description

The present invention relates to the improvement of a curved guide piece that serves to route the spent wire used in wire electrical discharge machines that use a device for recovering and cutting the spent wire which chops the wire into small segments after it has passed through the machining zone. The cutting device, of these machines, placed in the lower head, chops the wire into small segments which are then removed as waste under the pressure of the machining liquid via a duct (see document EP 1 153 688).

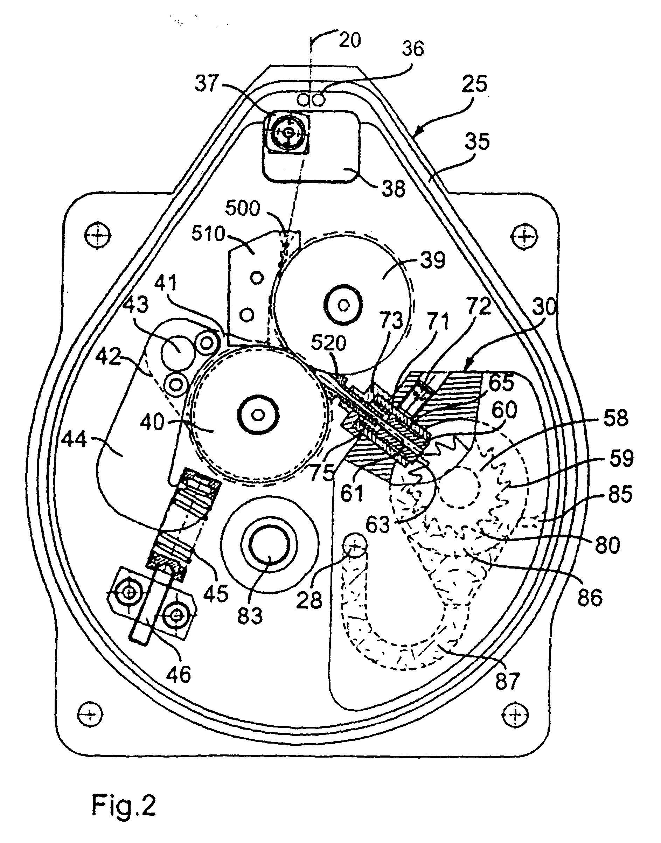

Figure 2 depicts the lower head 25 and the cutting device 30 that it contains. The lower head 25 may be closed by means of a cover, not depicted, which presses against the seal 35. The wire 20 enters the casing at a wire guide 36, passes via an electrical contact 37 mounted on an insulating support 38 in order to finish up, by way of a routing device, not depicted, in a guide cone 500 machined in a piece 510 which deflects the path of the wire 20 in such a way as to allow it to be accommodated precisely between the two drive rollers 39, 40 which pull it along.

The axle of the drive roller 39 is fixed, while the axle of the roller 40 is able to move and is urged with an adjustable predetermined force against the roller 39. This roller 40 for this purpose is mounted on a first arm 41 of a two-arm lever 42, the two arms being articulated on a pivot 43. The second arm 44 of this lever is subjected to the action of a spring 45 the effect of which can be adjusted by means of a screw 46. On leaving the rollers 39, 40 the wire enters the cutting device 30 by virtue of a second guide cone 520.

The above drive device is housed in a sealed chamber delimited and closed off by the seal 35 in which a flow of liquid of 3 to 4 litres/minute at a pressure of 2 bar is injected into the first chamber and re-emerges via the guide cone 520 towards a second chamber 30 at atmospheric pressure and containing the spent wire cutting device which chops the wire into small segments.

Because they become worn, various pieces of the assembly described above have to be replaced and adjusted at least every 500 operating hours according to a procedure described in detail in the client maintenance manual that comes with ROBOFIL machines, particularly in the section entitled "Défaut circuit fil [Wire circuit fault]" where the various critical pieces of this device, including in particular the piece 510 that originated the present invention, are discussed.

The curved guide piece 510 which deflects the wire 20 around the roller 39 to introduce it between the two drive rollers 39, 40 resembles a toboggan in which the hollow wire guiding slideway 511 has a V-shaped cross section, not depicted. The wire slides along at the bottom of this slideway 511 to re-emerge via a nose 512 the end of which can be brought up close to the generatrix of contact between the two rollers 39, 40 so as to facilitate wire capture and drive the wire. At the entry to the same piece - the guide 510, as already described above, the wire is introduced via a funnel cone 500 connected to a coaxial bore 513 the axis of which opens tangentially at 514 onto the concave rounded portion 516, of radius 20 mm, which follows the radius of the roller 39.

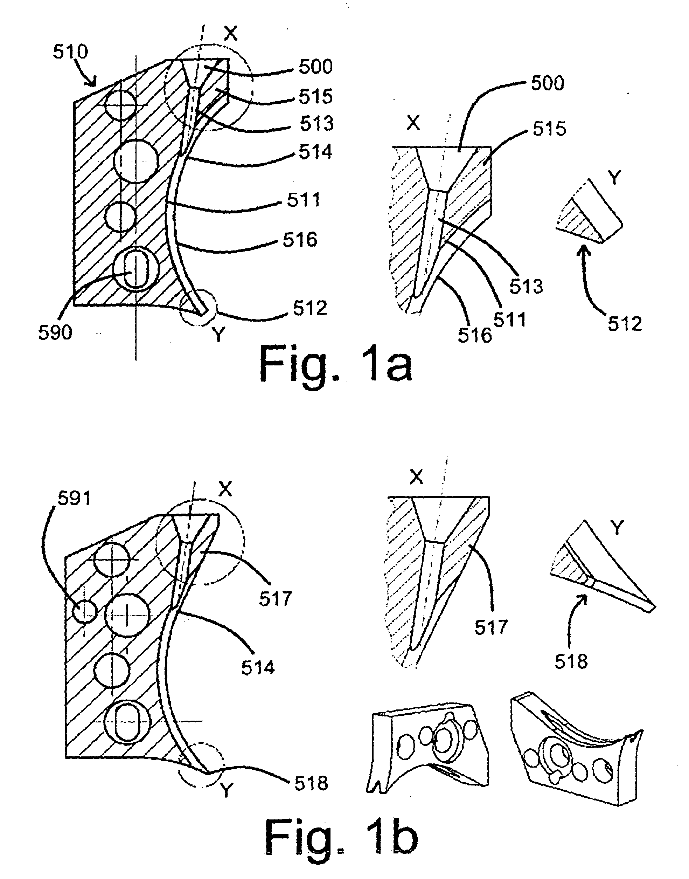

This concave rounded portion 516 in which the curved slideway 511 is machined, when viewed in profile in Figure 1a, develops from the said point of tangency 514 as far as the end of the nose 512, an angular sector of 47° on a circle of radius 20 mm. The same concave rounded portion 516 is continued on the other side of the point of tangency 514, thus creating a needless protrusion 515, as the wire is not guided there. This piece - the guide 510 - is adjusted and fixed by means of four bores, including an oblong peg hole 590.

However, as set out hereinbelow, the presence of the said protrusion 515 leads to a major problem with reliability, to which the present invention constitutes a solution.

Following prolonged and intense usage, particularly with steel wire of small diameter of the order of 0.1 mm, it has been found that the rigid wire can not be captured by the rollers 39, 40, can escape through the gaps between the rounded portion 516 and the roller 39 or at the exit from the nose 512 before being taken up by the rollers 39, 40, and become misplaced in the empty spaces in the lower head. Such incidents cause wire to jam in the mechanisms of the lower head 25 and may give rise to damage to and prolonged downtime of the installation.

Numerous tests have made it possible to conclude that these accidental phenomena of the wire escaping and becoming misplaced could be remedied by enhancing the flow of liquid in the anticlockwise direction of rotation of the roller 39 upstream of the point of tangency 514. This is a conclusion that at first glance appears to be a paradox because the machine operator, in order to remedy the problem, would obviously first of all have the idea of bringing the piece 510 up closer to the roller 39, until they rub, thus running the risk of premature destruction of these two pieces.

The object of the present invention is to remedy the aforementioned disadvantages by improving the piece 510 as described in Claim 1 using means that make it possible to enhance the flow of liquid in the anticlockwise direction of rotation of the roller 39 upstream of the point of tangency so as to force the wire to remain in the slideway 511.

To this end, the invention is characterized, as described in Claim 2, in that the new piece has a clearance 517 in place of the protrusion 515.

One preferred embodiment is explained with the aid of the figures.
Figure 1a is a section, on its mid-plane, of the initial piece 510 comprising the defects and underlying the invention. In addition, Figure 1a comprises two enlargements X and Y respectively of the nose 512 and of the protrusion 515.
Figure 1b is a section on its mid-plane of the improved piece intended to replace the previous one and object of the invention. In addition, Figure 1b comprises two enlargements X and Y respectively of the new nose 518 and of the clearance 517, and two perspective views of the said improved new piece.
Figure 2 shows the surroundings of the lower machining head of a wire electrical discharge machine.

According to Figure 1b, in comparison with Figure 1a, the protrusion 515 has been omitted and replaced by a clearance 517 which allows free passage to a flow of liquid in the same direction as the direction of rotation of the roller 39, forcing the wire to enter the slideway 511.

In addition, in order to get even closer to the generatrix of contact between the two rollers 39, 40 as described in Claim 3, the nose 512 has been lengthened 518 and in the new embodiment has a more pointed shape, thus eliminating the risk of the wire escaping on exiting the piece 510. The concave rounded portion 516 in the new embodiment Figure 1b develops from the point of tangency 514 as far as the end of the nose 518, an angular sector of 52° on a circle of radius 20 mm, namely an additional deployment of 5° by comparison with the defective initial piece in Figure 1a, leading to a more pointed shape of the nose 518.

Finally, to make adjustment easier, a second peg hole has been added 591, making it possible, in the event of dismantling, for the new piece to be repositioned immediately without having to remake the adjustments.

Of course the embodiment described hereinabove, of a new guide piece serving to route the spent wire and intended to replace the original piece 510, is not in any way limiting and can be adapted while at the same time respecting the dimensions of the other original pieces that make up the device for recovering the spent wire and which are depicted in Figures 2. The clearance 517 may for example be machined more deeply and come close to the inlet cone 500. The overall exterior shape of the piece may be adapted differently, as may the nose 518, etc.

## Claims

1. Guide piece serving to route the spent wire (20),
- installed upstream of and between wire driving rollers (39, 40) in order to introduce therein the spent wire in electrical discharge machines that employ a device for recovering and cutting the spent wire (30) which chops it into small segments after it has passed through the machining zone,
- intended to replace a piece (510) performing the same function, comprising a protrusion (515) which disrupts the flow of a liquid at the entrance to a curved wire guiding slideway (511), an outlet nose (512) the end of which is close to the generatrix of contact between the said rollers (39, 40),
- **characterized in that** it comprises means making it possible to enhance the said flow of liquid in the direction of rotation of the rollers (39, 40).

2. Guide piece serving to route the spent wire, according to Claim 1, **characterized in that** the said means consist in improving the original piece (510) by making a clearance (517) in place of the protrusion (515) leaving a free passage for a flow of liquid in the same direction as the direction of rotation of the roller (39) forcing the wire into the slideway (511).

3. Guide piece serving to route the spent wire, according to Claims 1 and 2, **characterized by** an additional deployment of at least 5° by comparison with the initial piece, of the concave rounded portion (516) in which the wire guiding slideway (511) is machined, leading to a more pointed shape of the outlet nose (518).

4. Guide piece serving to route the spent wire, according to Claims 1 and 2, **characterized by** the presence of a second peg hole (591) making it possible, in the event of dismantling, for the new piece to be repositioned immediately without having to remake the adjustments.
